(19) Europäisches Patentamt / European Patent Office / Office européen des brevets

(11) **EP 3 602 773 B1**

(12) **FASCICULE DE BREVET EUROPEEN**

(45) Date de publication et mention de la délivrance du brevet:
**02.06.2021 Bulletin 2021/22**

(21) Numéro de dépôt: **18715782.1**

(22) Date de dépôt: **22.03.2018**

(51) Int Cl.:
***H02P 23/00*** *(2016.01)*

(86) Numéro de dépôt international:
**PCT/FR2018/050696**

(87) Numéro de publication internationale:
**WO 2018/178543 (04.10.2018 Gazette 2018/40)**

(54) **PROCÉDÉ DE DÉTERMINATION DE L'INTENSITÉ ET DU COUPLE ÉLECTROMAGNÉTIQUE D'UNE MACHINE ÉLECTRIQUE ASYNCHRONE EN FONCTIONNEMENT**

VERFAHREN ZUR BESTIMMUNG DER INTENSITÄT UND DES ELEKTROMAGNETISCHEN DREHMOMENTS EINER ASYNCHRONEN ELEKTRISCHEN MASCHINE WÄHREND DES BETRIEBS

METHOD FOR DETERMINING THE INTENSITY AND ELECTROMAGNETIC TORQUE OF AN ASYNCHRONOUS ELECTRICAL MACHINE DURING OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2017 FR 1752553**

(43) Date de publication de la demande:
**05.02.2020 Bulletin 2020/06**

(73) Titulaire: **Université d'Artois
62000 Arras (FR)**

(72) Inventeurs:
• **NINET, Olivier
62400 Bethune (FR)**
• **LECOINTE, Jean-Philippe
62232 Fouquières les Bethune (FR)**
• **MORGANTI, Fabrice
62920 Gonnehem (FR)**
• **YOUNSI, Mohamed Omar
59000 Lille (FR)**

(74) Mandataire: **Verriest, Philippe et al
Cabinet Germain & Maureau
12, rue Boileau
BP 6153
69466 Lyon Cedex 06 (FR)**

(56) Documents cités:
**WO-A1-2011/085805**

**Description**

La présente invention concerne un dispositif et un procédé de détermination du courant électrique absorbé et du couple électromagnétique produit par une machine électrique asynchrone directement connectée au réseau.

Différents dispositifs connus, tel celui décrit dans le document WO2011085805, permettent de mesurer le courant électrique circulant dans un circuit électrique, notamment dans une machine asynchrone. Ces dispositifs nécessitent en général d'accéder à un des câbles dans lesquels le courant électrique circule et de « pincer » ce câble avec une sonde (à effet Hall par exemple).

En milieu industriel notamment, il n'est parfois pas possible d'accéder aux câbles, souvent intégrés à des installations électriques lourdes ou bien rangés dans le même fourreau si bien que, dans certains cas, des moteurs sont alimentés par un seul câble contenant les trois phases. La connaissance de l'intensité du courant consommée est pourtant nécessaire, par exemple dans le cas de moteurs asynchrones dont on souhaite estimer le rendement et le niveau de charge, sans arrêt de la chaine de production.

L'invention a donc pour but de proposer un procédé et un dispositif simple remédiant à cette limite des moyens connus, en permettant d'estimer de manière non invasive l'intensité du courant traversant, puis le couple électromagnétique, fourni par un moteur électrique asynchrone en fonctionnement.

A cet effet, la présente invention concerne un procédé de détermination d'au moins une grandeur caractéristique d'une machine électrique asynchrone en fonctionnement, la machine comprenant au moins un stator et un rotor tournant par rapport au stator autour d'un axe confondu avec l'axe longitudinal de la machine, le stator comprenant au moins deux pôles, et rayonnant, en fonctionnement, en au moins un premier ensemble de points localisés autour de la surface externe de la machine, un champ magnétique ayant une composante axiale orientée parallèlement audit axe, et en au moins un deuxième ensemble de points localisés autour de la surface externe de la machine, un champ magnétique ayant une composante tangentielle définie le long d'une direction contenue dans un plan transversal audit axe et orientée perpendiculairement à la droite passant, dans ce plan, par ledit point et ledit axe, le procédé comprenant une phase d'étalonnage puis une phase d'évaluation de l'au moins une grandeur caractéristique :

- la phase d'étalonnage comprenant :

  ○ une première étape de mesure, au niveau dudit premier ensemble de points, de la composante axiale et simultanément, au niveau dudit deuxième ensemble de points, de la composante tangentielle, ainsi que du déphasage entre la composante axiale et la composante tangentielle, pour une pluralité de valeurs d'intensité absorbée par la machine,

  ○ à partir des résultats de la première étape de mesure, une étape de construction d'une courbe d'étalonnage sous la forme d'une droite liant l'intensité absorbée et la composante axiale, ladite étape de construction comprenant une étape de détermination d'un binôme de fonctionnement à vide caractérisé par une amplitude de composante axiale à vide et une intensité absorbée à vide, et une étape de détermination d'un deuxième binôme de fonctionnement caractérisé par une deuxième amplitude de composante axiale et une deuxième intensité absorbée

Ladite étape de détermination d'un binôme de fonctionnement à vide comprenant en outre une étape de détermination d'un domaine de fonctionnement à vide et d'un point de ce domaine caractérisé par une amplitude de composante tangentielle à vide et une amplitude de composante axiale à vide mesurées simultanément à la première étape de mesure

- la phase d'évaluation comprenant :

  ○ une deuxième étape de mesure, en un point de fonctionnement, de la composante axiale, de la composante tangentielle et du déphasage entre la composante tangentielle et la composante axiale,

  ○ une étape de détermination, au point de fonctionnement mesuré, d'au moins une grandeur caractéristique de la machine à partir des valeurs mesurées à la deuxième étape de mesure, en utilisant la courbe d'étalonnage.

Selon un aspect de l'invention, la au moins une grandeur caractéristique est l'intensité absorbée par la machine, dans lequel l'étape de détermination du binôme de fonctionnement à vide comprend les étapes suivantes :

  ○ Estimer une intensité absorbée à vide par la machine à partir :

- d'un schéma monophasé équivalent (14) de la machine et de caractéristiques constructeur de la machine,
- ou
- d'un modèle simplifié selon lequel l'intensité absorbée à vide est égale à une valeur comprise entre 40 et 50 % de l'intensité absorbée nominale indiquée sur une plaque signalétique de la machine,

  ◦ Déterminer un binôme de fonctionnement à vide caractérisé par l'amplitude de composante axiale à vide et l'intensité absorbée à vide,

Selon un aspect de l'invention, l'étape de détermination du domaine de fonctionnement à vide consiste à identifier, sur une courbe formée par les points de coordonnées égales aux amplitudes de composantes axiales et aux amplitudes de composantes tangentielles mesurées simultanément au cours de la première étape de mesure, une première portion de la courbe plus pentue qu'une deuxième portion de cette courbe.

Selon un aspect de l'invention, la portion la plus pentue constitue le domaine de fonctionnement à vide.

Selon un aspect de l'invention, le point de ce domaine qui présente une amplitude de composante tangentielle maximum est choisi comme point de fonctionnement à vide, caractérisé par une amplitude de composante tangentielle à vide et une amplitude de composante axiale à vide.

Selon un aspect de l'invention, le point de fonctionnement à vide caractérisé par une amplitude de composante tangentielle à vide et une amplitude de composante axiale à vide détermine l'amplitude de composante axiale à vide du binôme de fonctionnement à vide.

Selon un aspect de l'invention, l'intensité absorbée à vide du binôme de fonctionnement à vide est calculée à partir du schéma monophasé équivalent de la machine et de caractéristiques constructeur de la machine, à savoir le couple de démarrage et/ou le couple maximal, si celles-ci sont disponibles, ou bien estimée à une valeur comprise entre 40 et 50 % de l'intensité nominale indiquée sur une plaque signalétique de la machine.

Selon un aspect de l'invention, l'au moins une grandeur caractéristique est l'intensité absorbée par la machine, et le schéma monophasé équivalent comprend une branche magnétisante avec une tension aux bornes de cette branche magnétisante, et l'étape de détermination du deuxième binôme de fonctionnement comprend les étapes suivantes :

  ◦ Déterminer un déphasage à vide égal au déphasage mesuré entre la composante axiale à vide et la composante tangentielle à vide,

  ◦ Calculer à partir du schéma monophasé équivalent (14) de la machine et des caractéristiques constructeur de la machine, les valeurs du déphasage entre la tension aux bornes de la branche magnétisante et l'intensité absorbée par la machine, et construire une courbe de l'évolution de ces valeurs en fonction de l'intensité absorbée par la machine ;

  ◦ Recaler la courbe de l'évolution du déphasage entre la tension aux bornes de la branche magnétisante et l'intensité absorbée par la machine, en fonction de l'intensité absorbée par la machine, par rapport à une courbe de l'évolution du déphasage mesuré entre la composante axiale et la composante tangentielle, de sorte qu'à chaque point de la courbe de l'évolution du déphasage mesuré entre la composante axiale et la composante tangentielle correspond un point correspondant de la courbe de l'évolution du déphasage entre la tension aux bornes de la branche magnétisante et l'intensité absorbée par la machine ;

  ◦ Déterminer un deuxième point sur la courbe de l'évolution du déphasage mesuré entre la composante axiale et la composante tangentielle, tel que le déphasage en ce deuxième point est un deuxième déphasage supérieur au déphasage à vide;

  ◦ Déterminer sur la courbe de l'évolution du déphasage entre la tension aux bornes de la branche magnétisante et l'intensité absorbée par la machine, en fonction de l'intensité absorbée par la machine, le point correspondant au deuxième point;

  ◦ Déterminer la deuxième amplitude de composante axiale égale à l'amplitude de la composante axiale mesurée simultanément au deuxième déphasage;

  ◦ Déterminer la deuxième intensité absorbée égale à l'abscisse du point correspondant au deuxième point, sur la courbe de l'évolution, en fonction de l'intensité absorbée par la machine, du déphasage entre la tension aux bornes de la branche magnétisante et l'intensité absorbée par la machine;

  ◦ Déterminer le deuxième binôme de fonctionnement caractérisé par la deuxième amplitude de composante axiale et la deuxième intensité absorbée.

Selon un aspect de l'invention, si on ne dispose pas des caractéristiques constructeur de la machine, le deuxième point est choisi sur la courbe de l'évolution du déphasage mesuré entre la composante axiale et la composante tangentielle, de sorte que le déphasage en ce deuxième point est un déphasage de préférence compris entre 50 et 60 degrés.

Selon un aspect de l'invention, dans le cas les caractéristiques constructeurs de la machine ne sont pas disponibles, le deuxième point choisi sur la courbe de l'évolution du déphasage mesuré entre la composante axiale et la composante tangentielle est un point proche du point de fonctionnement nominal.

Selon un aspect de l'invention, si on dispose des caractéristiques constructeur de la machine, le deuxième point est choisi sur la courbe de l'évolution du déphasage mesuré entre la composante axiale et la composante tangentielle, de sorte que le déphasage en ce deuxième point soit suffisamment éloigné du déphasage au point de fonctionnement à vide.

Selon un aspect de l'invention, l'au moins une grandeur caractéristique comprend le couple électromagnétique généré au niveau du rotor de la machine électrique asynchrone en fonctionnement, le procédé comprenant une première phase consistant à mettre en œuvre le procédé de détermination de l'intensité absorbée tel que décrit, et une deuxième phase consistant à déterminer une valeur estimée du couple électromagnétique à partir :

a. de l'intensité absorbée déterminée au cours de la première phase, ou

b. du couple électromagnétique nominal et du courant nominal tels qu'indiqués sur une plaque signalétique de la machine, et des valeurs suivantes mesurées ou déterminées au cours de la première phase :

i. l'amplitude de la composante tangentielle, et le déphasage entre la composante tangentielle et la composante axiale, et l'intensité absorbée au point de fonctionnement mesuré,

ii. le déphasage à vide entre la composante tangentielle à vide et la composante axiale à vide,

iii. une deuxième amplitude de composante tangentielle mesurée simultanément à la deuxième amplitude de composante axiale, et le déphasage entre la deuxième amplitude de composante tangentielle et la deuxième amplitude de composante axiale.

Selon un aspect de l'invention, si les caractéristiques constructeurs de la machine sont connues, notamment si le couple de démarrage ou le couple maximal sont connus, alors l'amplitude de l'intensité absorbée suffit pour déterminer le couple électromagnétique produit par la machine.

Selon un aspect de l'invention, si les caractéristiques constructeurs de la machine ne sont pas connues, notamment si on ne connaît ni le couple de démarrage ni le couple maximal de la machine, alors le couple électromagnétique produit par la machine est déterminé à partir du couple électromagnétique nominal et du courant nominal tels qu'indiqués sur une plaque signalétique de la machine, et des valeurs suivantes mesurées ou déterminées au cours de la première phase :

i. l'amplitude de la composante tangentielle, et le déphasage entre la composante tangentielle et la composante axiale, et l'intensité absorbée au point de fonctionnement mesuré,

ii. le déphasage à vide entre la composante tangentielle à vide et la composante axiale à vide,

iii. une deuxième amplitude de composante tangentielle mesurée simultanément à la deuxième amplitude de composante axiale, et le déphasage entre la deuxième amplitude de composante tangentielle et la deuxième amplitude de composante axiale.

Selon un aspect de l'invention, dans le cas les caractéristiques constructeurs de la machine ne sont pas disponibles, le deuxième point choisi sur la courbe de l'évolution du déphasage mesuré entre la composante axiale et la composante tangentielle est un point proche du point de fonctionnement nominal.

L'invention concerne également un dispositif de détermination d'au moins une grandeur caractéristique d'une machine électrique asynchrone en fonctionnement, selon la revendication 6

Dans une variante préférée, ledit dispositif de détermination est tel que l'au moins un capteur de mesure de la composante axiale et l'au moins un capteur de mesure de la composante tangentielle forme un unique capteur. C'est-à-dire que le dispositif de détermination comprend au moins un capteur « fusionné », apte à la fois à mesurer la composante axiale et la composante tangentielle.

Ainsi, de manière tout à fait préférée, ledit dispositif de détermination comprend :

a. au moins un capteur « fusionné » de mesure de la composante tangentielle et de la composante axiale du champ rayonné par la machine autour de sa surface externe,

b. un programme d'ordinateur et/ou un support d'enregistrement comprenant un programme d'ordinateur comprenant les instructions nécessaires à la mise en œuvre des étapes du procédé selon l'invention lorsque ce programme est implémenté sur un ordinateur

Enfin, selon une sous-variante tout à fait préférée d'exécution de l'invention, et indifféremment de la variante choisie pour les capteurs (capteurs de mesure de la composante tangentielle et de la composante axiale distincts ou fusionnés) :

➢ le dispositif de détermination :

∘ est dédié à l'étude d'une machine électrique asynchrone en fonctionnement, la machine comprenant au moins un stator et un rotor tournant par rapport au stator autour d'un axe confondu avec l'axe longitudinal de la machine, le stator comprenant au moins deux pôles,

o comprend un capteur de mesure de la composante axiale du champ magnétique rayonné par la machine autour de sa surface externe, ledit capteur comprenant au moins une spire d'un fil électriquement conducteur enroulé autour d'une portion de surface plane délimitée par un dièdre et deux arcs de cercle centrés au sommet du dièdre, l'ouverture angulaire du dièdre étant déterminée pour couvrir au moins une partie d'un pôle ou une phase de la machine asynchrone, le capteur étant disposé dans un même plan transversal à et autour de l'axe de la machine.

L'ouverture angulaire doit être suffisante pour collecter le champ nécessaire à l'évaluation du courant absorbé par la machine. Bien entendu, l'Homme du Métier sait choisir l'ouverture angulaire satisfaisant cette condition.
Pour sa bonne compréhension, l'invention est décrite en référence aux dessins ci-annexés représentant, à titre d'exemple non limitatif, une forme de réalisation d'un procédé et d'un dispositif selon l'invention.

Figure 1 est une vue schématique d'une machine asynchrone vue de côté.

Figure 2 est une vue de trois positionnements possibles pour mesurer respectivement les trois composantes du champ de dispersion autour de la machine.

Figure 3 est une vue des capteurs de mesure de la composante axiale du champ positionnés autour du flasque de celle-ci. L'invention ne requiert qu'un seul de ces capteurs.

Figure 4 donne l'évolution des composantes fondamentales $E_{TAN,(1)}$ et $E_{Z,(1)}$ des forces électromotrices (fem) $E_{TAN}$ et $E_Z$ relevées aux bornes des capteurs mesurant respectivement les composantes axiale et tangentielle du flux de dispersion en fonction du courant sur une machine de type llkW Leroy-Somer - à cage d'écureuil - 4 pôles de classe IE2.

Figure 5 donne l'évolution des composantes fondamentales $E_{TAN,(1)}$ et $E_{Z,(1)}$ des fem $E_{TAN}$ et $E_Z$ relevées aux bornes des capteurs mesurant respectivement les composantes axiale et tangentielle du flux de dispersion en fonction du courant sur une machine de type llkW Leroy-Somer - à cage d'écureuil - 4 pôles de classe IE3.

Figure 6 représente la courbe de la mesure du déphasage $\beta_{TAN,(1)}$ par rapport au courant de la fem $E_{TAN,(1)}$, celle du déphasage $\beta_{TAN\_z,(1)}$ entre les fem $E_{TAN,(1)}$ et $E_{Z,(1)}$, en fonction du courant, sur une machine de type llkW Leroy-Somer - à cage d'écureuil - 4 pôles de classe IE2.

Figure 7 représente la courbe de la mesure du déphasage $\beta_{TAN,(1)}$ par rapport au courant de la fem $E_{TAN,(1)}$, celle du déphasage $\beta_{TAN\_z,(1)}$ entre les fem $E_{TAN,(1)}$ et $E_{Z,(1)}$, sur une machine de type llkW Leroy-Somer - à cage d'écureuil - 4 pôles de classe IE3.

Figure 8 représente la courbe de l'évolution de la fem $E_{TAN,(1)}$ en fonction de la fem $E_{Z,(1)}$ sur une machine de type llkW Leroy-Somer - à cage d'écureuil - 4 pôles de classe IE2.

Il est connu qu'une machine asynchrone en fonctionnement rayonne un champ magnétique autour de sa surface externe ; ce champ magnétique est également appelé champ de dispersion. Ce champ magnétique de dispersion résulte du champ interne produit par le stator de la machine asynchrone et imparfaitement canalisé à l'intérieur de la machine.
La machine asynchrone considérée est de forme sensiblement cylindrique autour d'un axe longitudinal 9. En tout point de l'environnement de la machine on considérera le repère orthonormé ayant son origine en ce point, avec un axe Z passant par ce point et parallèle à l'axe longitudinal 9 de la machine, un axe NOR coupant perpendiculairement l'axe longitudinal de la machine et passant par le point considéré, et un axe TAN perpendiculaire aux axes Z et NOR.

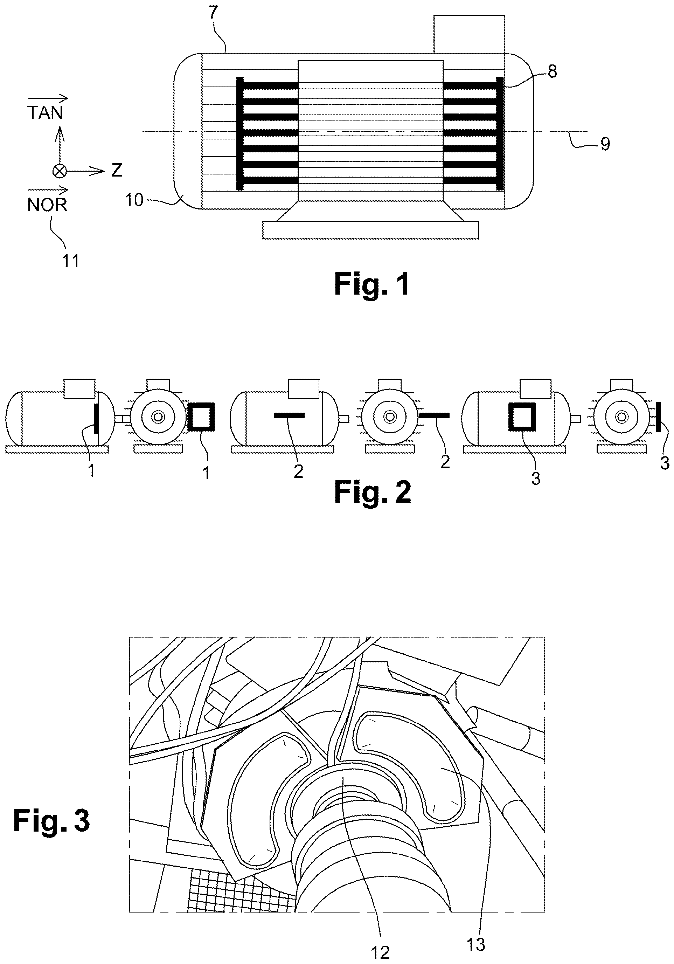

La figure 1 représente une vue schématique de la machine asynchrone 10 dans un plan parallèle à son axe longitudinal, et du repère 11 orthonormé Z, NOR, TAN.

Dans ce repère, le champ magnétique présente une composante axiale selon l'axe Z, une composante tangentielle selon l'axe TAN et une composante normale selon l'axe NOR. Plusieurs types de capteurs peuvent être utilisés pour mesurer ces trois composantes. On peut notamment utiliser un capteur bobiné, de 200 spires par exemple, le plan défini par les spires étant placé perpendiculairement à la direction de la composante que l'on souhaite mesurer.

La figure 2 présente trois positions possibles du plan des spires du capteur pour mesurer respectivement la composante axiale 1, la composante tangentielle 2, ou la composante normale 3.

La composante axiale peut avantageusement être mesurée par un capteur bobiné configuré selon une forme en arc de cercle comme représenté sur la figure 3, et dimensionné pour couvrir une partie des têtes de bobines statoriques. La composante axiale étant uniquement tributaire des effets d'extrémités de la machine, il est particulièrement avantageux de disposer ce capteur 13 dans un plan transversal à l'axe Z et autour du flasque 12 de la machine comme cela est représenté sur la figure 3. De préférence, le capteur en arc de cercle aura une ouverture angulaire couvrant un pôle du stator d'une machine, soit 90 degrés d'ouverture angulaire pour une machine à quatre pôles.

La mesure de la composante tangentielle du flux de dispersion est réalisée avec un capteur, par exemple de forme carrée 40x40 mm et de 200 ou 400 spires, placé en un point proche de la surface externe de la machine, par exemple dans une position médiane entre les deux extrémités longitudinales de la machine, le plan des spires étant orienté perpendiculairement à l'axe TAN en ce point.

Dans ce qui suit, $X_0$ et $X_n$ désignent les valeurs de la grandeurs, respectivement au fonctionnement de la machine à vide et au point de fonctionnement nominal. D'autre part les grandeurs considérées par la suite sont, sauf indication contraire, des grandeurs périodiques ; elles sont décomposées dans l'espace de Fourier; dans cet espace on ne s'intéressera qu'au fondamental de cette grandeur. $X_{(1)}$, $X_{(1),0}$ et $X_{(1),n}$ désigneront ainsi le fondamental de, respectivement $X$, $X_0$ et $X_n$.

Dans la suite de l'exposé pour désigner les composantes du flux de dispersion on utilisera généralement :

- la « composante axiale » pour désigner la composante fondamentale $E_{Z,(1)}$ de la fem $E_Z$ aux bornes du capteur de mesure de la composante axiale du champ de dispersion ;
- la « composante tangentielle » pour désigner la composante fondamentale $E_{TAN,(1)}$ de la fem $E_{TAN}$ aux bornes du capteur de mesure de la composante tangentielle du champ de dispersion .

Il a été montré et vérifié expérimentalement que l'amplitude $E_{Z,(1)}$ du fondamental de la composante axiale Z évolue linéairement en fonction de l'amplitude du fondamental $I^s_{(1)}$ du courant absorbé.

Ainsi, la tension délivrée par le capteur mesurant l'amplitude de la composante axiale Z donne une image fiable de l'amplitude du courant absorbé par la machine. Cependant, le coefficient de proportionnalité entre l'amplitude de la fem image de la composante axiale Z et l'amplitude du courant dépend de la position du capteur.

Il est d'autre part constaté que l'amplitude de la composante tangentielle $E_{TAN,(1)}$ évolue de manière quasi-linéaire pour les points de fonctionnement de la machine compris en 1/3 et 3/3 de la plage de variation du courant, alors qu'elle tend à augmenter plus rapidement lorsque l'on se rapproche du fonctionnement à vide de la machine. Ce phénomène conduit à l'apparition d'un coude, qui peut être assez marqué, sur la courbe représentant l'évolution de l'amplitude de la composante tangentielle en fonction de la composante axiale.

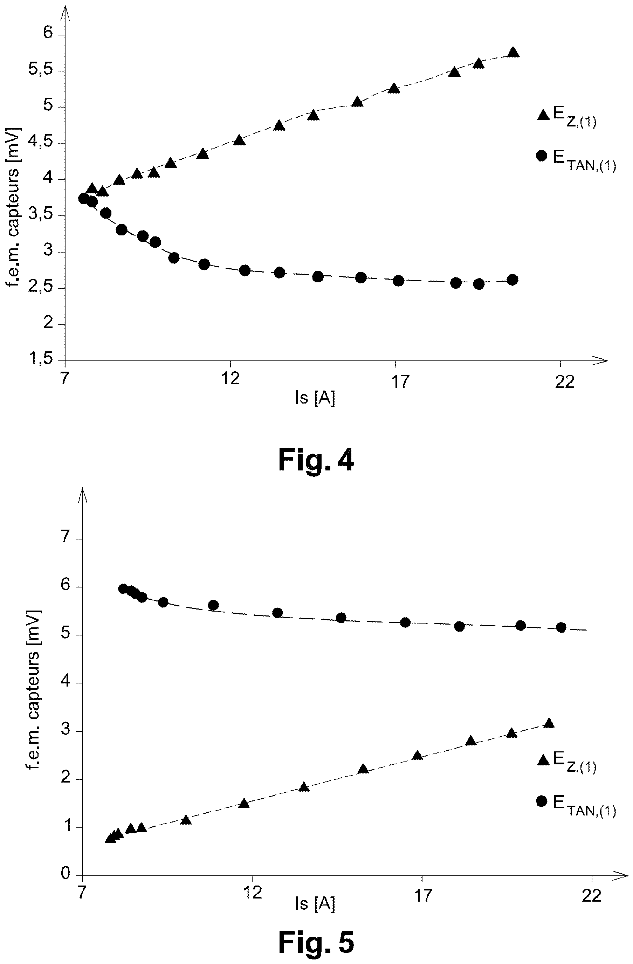

Ces résultats sont représentés figures 4, 5 et 8. La figure 4 correspond aux résultats des mesures faites sur une machine asynchrone industrielle llkW Leroy Somer 4 pôles - à cage d'écureuil de classe IE2, avec un capteur carré de dimensions 40x40mm de 200 spires pour la mesure de la composante tangentielle et un capteur polaire d'ouverture angulaire 90 degrés adapté aux dimensions de la machine et collé à une position angulaire arbitraire autour du flasque de la machine pour la mesure de la composante axiale. La figure 5 correspond aux résultats des mesures faites sur une machine asynchrone industrielle 11kW Leroy Somer 4 pôles - à cage d'écureuil de classe IE3, avec un capteur carré de dimensions 40x40mm de 400 spires pour la mesure de la composante tangentielle et un capteur polaire d'ouverture angulaire 90 degrés adapté aux dimensions de la machine et collé à une position angulaire arbitraire autour du flasque de la machine pour la mesure de la composante axiale.

Ces observations ont également été reproduites sur des machines à rotors bobinés de 3 KW.

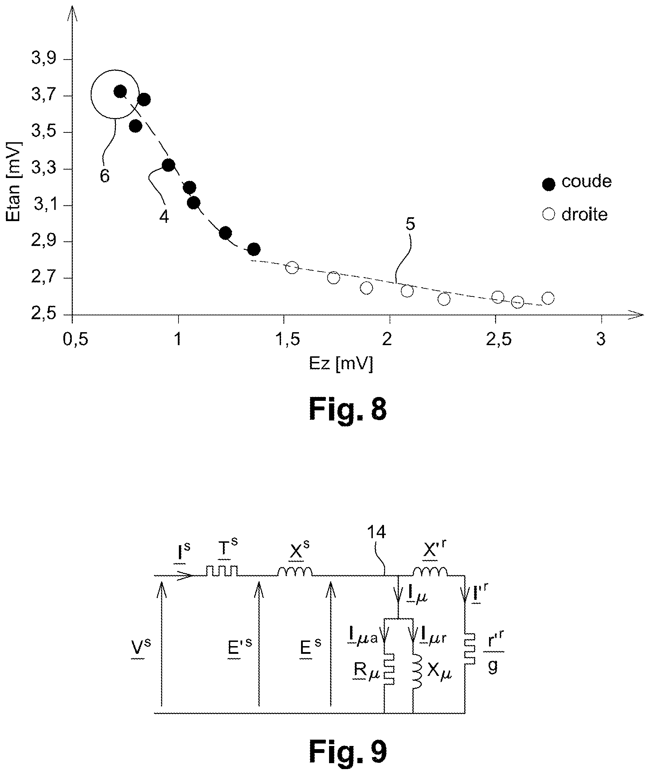

La figure 8 présente l'évolution de l'amplitude de la composante tangentielle en fonction de la composante axiale pour les mesures représentées sur la figure 4. Cette figure fait apparaître un « coude » assez marqué dans la courbe, entre une première portion de courbe quasi-linéaire 4 et une deuxième portion de courbe quasi-linéaire 5 ; ce coude constitue, dans le procédé selon l'invention, un marqueur des points de fonctionnement proche de la machine à vide qui se situent autour de la première portion de courbe. Le point de fonctionnement à vide 6 sera déterminé comme étant celui qui présente une valeur maximale de la composante tangentielle.

Ces observations ont également été reproduites sur des machines à rotors bobinés.

D'autre part, le fondamental de la composante axiale est déphasé par rapport au fondamental de la composante tangentielle et ce déphasage est fonction également du courant absorbé par la machine, cette fonction n'étant pas linéaire. Or, il a été montré et vérifié expérimentalement :

- d'une part que l'évolution de ce déphasage en fonction du courant présente des caractéristiques similaires, quel que soit le type de rotor ou la classe énergétique de la machine,
- d'autre part que l'évolution de ce déphasage en fonction du courant est également identique, à une constante près, à l'évolution du déphasage entre la composante tangentielle et le courant absorbé.

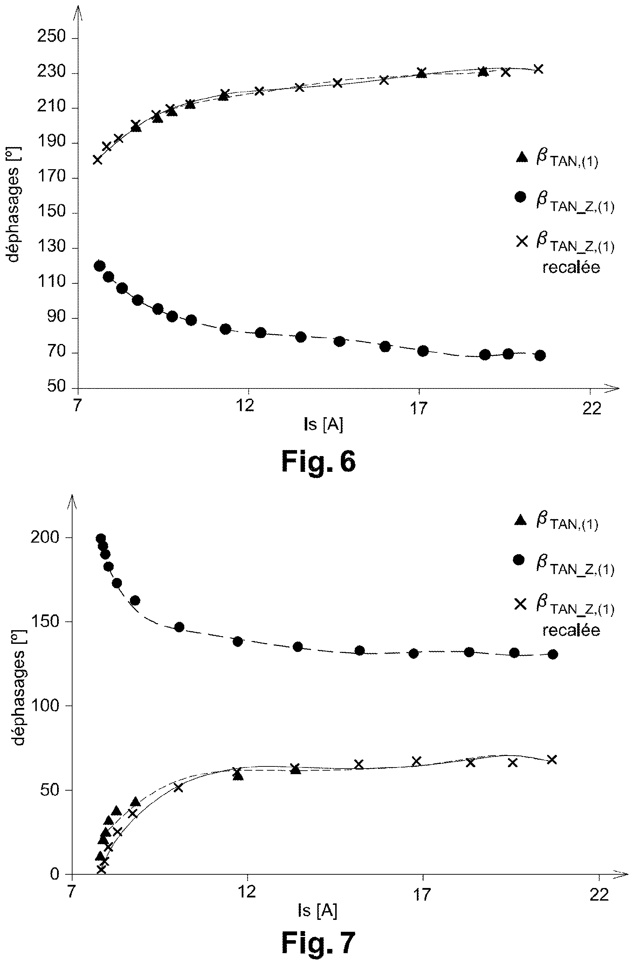

Ces observations sont illustrées sur les figures 6 et 7.

Le procédé selon l'invention se fonde sur ces différentes observations pour obtenir une mesure non invasive du courant absorbé et du couple électromagnétique généré par la machine en fonctionnement.

Le procédé se fonde sur la relation linéaire constatée entre l'amplitude $E_{Z,(1)}$ du fondamental de la composante axiale $E_Z$ et l'amplitude du fondamental $I^s_{(1)}$ du courant absorbé $I^s$.

Le procédé nécessite dans un premier temps une calibration pour déterminer les coefficients A et B de cette relation linéaire du type $I^s_{(1)} = A\,E_{Z,(1)} + B$.

Le procédé selon l'invention permet de faire cette calibration de manière non invasive.

A cet effet, une première étape du procédé consiste à effectuer avec les capteurs précédemment présentés une série de mesures simultanées des fem $E_{TAN,(1)}$ et $E_{Z,(1)}$ images des composantes tangentielles et axiales du flux, ainsi que du déphasage $\beta_{TAN\_z,(1)}$ entre ces deux composantes.

La deuxième étape consiste à exploiter les mesures des fem aux bornes des capteurs de champ externe. L'originalité du dispositif repose sur 2 points :

1) l'exploitation de l'évolution particulière des signaux relevés en fonction du courant d'alimentation qui permet de :

a. tirer une loi d'évolution linéaire entre le courant d'alimentation et la fem $E_{Z,(1)}$ aux bornes du capteur placé en position Z de sorte à capter la composante axiale du champ de dispersion,
b. de situer, en exploitant l'évolution de la fem $E_{TAN,(1)}$ induite par la composante tangentielle du flux de dispersion, le point proche de la marche à vide.

2) le rapprochement entre le déphasage $\beta_{TAN\_z,(1)}$ des composantes tangentielle et axiale du flux de dispersion avec le déphasage $\beta_{(1)}$ entre le courant d'alimentation et la fem $E^s_{(1)}$ aux bornes de la branche magnétisante du schéma monophasé équivalent.

On peut distinguer deux cas : le premier cas, où des informations complémentaires aux informations de la plaque signalétique sont disponibles, notamment les informations relatives au couple de démarrage et/ou au couple maximal ; le deuxième cas, où seules les informations de la plaque signalétique sont disponibles.

Dans les deux cas la première étape du procédé consiste à exploiter la fem $E_{TAN,(1)}$ correspondant à la composante tangentielle du flux externe et à détecter le coude que présente $E_{TAN,(1)}$ en fonction de $E_{Z,(1)}$. La machine se trouve alors dans un état proche de la marche à vide. Les points de la courbe de l'évolution de $E_{TAN,(1)}$ en ordonnée en fonction $E_{Z,(1)}$ en abscisse, qui se trouvent les plus à gauche du coude sont les plus proches de la marche à vide. On sélectionne l'un des points les plus à gauche de cette courbe à partir du coude et on relève ses coordonnées ($E_{Z,(1),0}$, $E_{TAN,(1),0}$).

$E_{Z,(1),0}$ est ainsi une première valeur de l'amplitude de la composante axiale correspondant à un point de fonctionnement à vide.

A cette première valeur $E_{Z,(1),0}$, il convient maintenant d'associer une valeur $I^s_{(1),0}$.

**Dans le premier cas,** lorsque l'on dispose des références « constructeurs » de la machine, on va de préférence utiliser le schéma monophasé équivalent de la machine asynchrone.
Ci-dessous est présenté un exemple de caractéristiques d'un catalogue de chez Leroy Somer, utilisées pour le moteur 11kW étudié.

| Type | Rated power at 50 Hz $P$ kW | Rated speed $N$ min⁻¹ | Rated torque $C$ Nm | Rated current $I$ A | Power factor Cos φ | | | Efficiency η | | | Starting current / Rated current $I_d/I_n$ | Starting torque / Rated torque $M_d/M_n$ | Max. torque / Rated torque $M_{max}/M_n$ | Apparent rated power kVA | Torque curve N° | Moment of inertia $J$ kg·m² | Weight kg |
|---|---|---|---|---|---|---|---|---|---|---|---|---|---|---|---|---|---|
| | | | | | 50% | 75% | 100% | 50% | 75% | 100% | | | | | | | |
| LS 56 L | 0.09 | 1460 | 0.6 | 0.39 | 0.42 | 0.52 | 0.80 | 42.8 | 49.6 | 55 | 3.2 | 2.8 | 2.8 | 0.27 | 2 | 0.00025 | 4 |
| LS 63 M | 0.12 | 1380 | 0.8 | 0.44 | 0.47 | 0.58 | 0.70 | 46.8 | 54 | 56 | 3.2 | 2.6 | 2.4 | 0.31 | 2 | 0.00035 | 4.8 |
| LS 63 M | 0.18 | 1390 | 1.2 | 0.64 | 0.44 | 0.55 | 0.65 | 51 | 58 | 62 | 3.7 | 2.7 | 2.7 | 0.45 | 2 | 0.00048 | 5 |
| LS 71 L | 0.25 | 1425 | 1.7 | 0.80 | 0.45 | 0.56 | 0.65 | 60 | 67 | 69 | 4.6 | 2.7 | 2.9 | 0.54 | 2 | 0.00068 | 6.4 |
| LS 71 L | 0.37 | 1420 | 2.5 | 1.08 | 0.47 | 0.69 | 0.70 | 68 | 72 | 72 | 4.3 | 2.4 | 2.8 | 0.73 | 2 | 0.00085 | 7.3 |
| LS 71 L | 0.55 | 1400 | 3.8 | 1.62 | 0.49 | 0.62 | 0.70 | 65 | 70 | 70 | 4.8 | 2.3 | 2.5 | 1.12 | 2 | 0.0011 | 8.3 |
| LS 80 L | 0.55 | 1410 | 3.8 | 1.42 | 0.55 | 0.68 | 0.79 | 62 | 69.3 | 73.4 | 4.5 | 2 | 2.3 | 1 | 7 | 0.0013 | 8.2 |
| LS 80 L | 0.75 | 1400 | 5.1 | 2.01 | 0.59 | 0.71 | 0.77 | 66 | 70 | 70 | 4.5 | 2 | 2.2 | 1.4 | 7 | 0.0018 | 9.3 |
| LS 80 L | 0.9 | 1425 | 6 | 2.44 | 0.54 | 0.67 | 0.73 | 70 | 73 | 73 | 5.8 | 3 | 3 | 1.6 | 6 | 0.0024 | 10.9 |
| LS 90 S | 1.1 | 1420 | 7.4 | 2.8 | 0.64 | 0.77 | 0.94 | 72.1 | 76.4 | 76.8 | 4.8 | 1.6 | 2 | 1.9 | 7 | 0.0026 | 11.5 |
| LS 90 L | 1.5 | 1430 | 9 | 3.4 | 0.60 | 0.74 | 0.92 | 77.5 | 79.4 | 78.5 | 5.3 | 1.9 | 2.3 | 2.3 | 7 | 0.0032 | 13.6 |
| LS 90 L | 1.8 | 1430 | 12 | 4 | 0.66 | 0.75 | 0.92 | 78 | 80.6 | 81 | 6 | 2.1 | 3.2 | 2.7 | 4 | 0.0037 | 15.3 |
| LS 100 L | 2.2 | 1435 | 14.7 | 4.8 | 0.59 | 0.73 | 0.91 | 78.5 | 81.5 | 81 | 5.9 | 2.1 | 2.5 | 3.4 | 7 | 0.0043 | 20 |
| LS 100 L | 3 | 1437 | 20.1 | 6.5 | 0.59 | 0.72 | 0.91 | 80.5 | 82.5 | 82.5 | 6 | 2.5 | 2.9 | 4.5 | 6 | 0.0055 | 22.5 |
| LS 112 M | 4 | 1438 | 26.3 | 8.2 | 0.57 | 0.76 | 0.93 | 83.4 | 84.2 | 84.2 | 7.1 | 2.5 | 3 | 5.7 | 6 | 0.0067 | 31.9 |
| LS 132 S | 5.5 | 1447 | 36.7 | 11.1 | 0.57 | 0.79 | 0.93 | 85.8 | 86.4 | 86.7 | 6.3 | 2.4 | 2.3 | 7.7 | 6 | 0.014 | 36.5 |
| LS 132 M | 7.5 | 1453 | 49.3 | 15.2 | 0.61 | 0.71 | 0.92 | 84.3 | 86.4 | 87 | 7 | 2.4 | 3 | 10.5 | 4 | 0.018 | 54.7 |
| LS 132 M | 9 | 1455 | 59.3 | 18.1 | 0.52 | 0.76 | 0.92 | 86.2 | 87.5 | 87.7 | 6.5 | 2.2 | 3.1 | 12.5 | 4 | 0.025 | 59.9 |
| LS 160 MP | 11 | 1464 | 72.2 | 21 | 0.57 | 0.79 | 0.93 | 85.4 | 88.5 | 88.4 | 7.2 | 2.3 | 3.2 | 14.5 | 1 | 0.03 | 79 |
| LS 160 LR | 15 | 1455 | 99 | 28.5 | 0.60 | 0.78 | 0.94 | 88.4 | 89.5 | 89.4 | 7.5 | 2.6 | 3.5 | 20 | 1 | 0.05 | 86 |
| LS 180 MT | 18.5 | 1459 | 121 | 35.2 | 0.57 | 0.79 | 0.94 | 90.5 | 90.5 | 90.5 | 7.5 | 2.7 | 3.2 | 24.4 | 1 | 0.085 | 108 |

**Données du catalogue Emerson pour le moteur 11kW étudié**

Les données qui sont exploitées en relation avec le schéma monophasé équivalent sont les suivantes:

- La puissance utile nominale $P_{un}$
- La vitesse de rotation nominale $N_n$
- La tension simple nominale $V_n^s$
- Le courant nominal $I_n^s$
- Le couple utile nominal $C_n$
- Le couple de démarrage $C_d$
- Le couple maximal $C_{max}$
- Le rendement au fonctionnement nominal $\eta_n$
- Le facteur de puissance au fonctionnement nominal $FP_n$

Les pertes par ventilation et frottement $p_m$ sont considérées comme étant égales à 1.2% de $P_{abs,n}$.

Le schéma monophasé équivalent 14 de la machine asynchrone est un modèle mathématique de la machine, représenté à la figure 9. Il est classiquement utilisé en électrotechnique et comprend notamment un composant appelé dans la suite de cet exposé « la branche magnétisante » représentée par une résistance $R_\mu$ matérialisant les pertes fer dans le circuit magnétique et une réactance magnétisante $X_\mu$ ; la tension aux bornes de cette branche magnétisante est désignée par $E^s$, et $I^s$ est l'intensité absorbée par la machine que l'on cherche ici à mesurer de manière non invasive.

Les autres grandeurs considérées avec le schéma monophasé équivalent de la machine sont les suivantes :

- $r^s$ est la résistance d'une phase statorique,
- $r'^r$ est la résistance d'une phase rotorique ramenée au stator,
- $R_\mu$ est la résistance matérialisant les pertes fer dans le circuit magnétique,
- $x^s$ est la réactance de fuite d'une phase statorique,
- $x'^r$ est la réactance de fuite, ramenée au stator, d'une phase rotorique,
- $X_\mu$ est la réactance magnétisante,
- $g$ est le glissement,
- $V^s$ est la tension simple d'alimentation.

On fait l'hypothèse que $r^s$ est suffisamment faible pour être négligée : $r^s = 0$. **Etape 1 de l'utilisation du schéma monophasé équivalent : estimation de $r'^r$ et $N\omega$** La première étape consiste en la détermination de $r'^r$ et de $N\omega = x^s + x'^r$.

Nous avons les puissances au niveau du stator :

$$P_n^s = 1000 \frac{P_u}{\eta/100}$$

avec $P_u$ en kW

$$Q_n^s = \sqrt{\frac{P_n^{s\,2}}{FP_n^{\,2}} - P_n^{s\,2}}$$

Les puissances aux bornes de la branche magnétisante et de la branche rotorique sont :

$$P_n^1 = P_n^s$$

$$Q_n^1 = Q_n^s - 3x^s(i)I_n^{s\,2}$$

D'où nous calculons la tension aux bornes de la branche magnétisante:

$$E_n^s = \frac{\sqrt{P_n^{1\,2} + Q_n^{1\,2}}}{3I_n^s}.$$

Le couple maximal ou le couple de démarrage peuvent être utilisés comme indiqué ci-dessous.

• **Méthode 1 de calcul de $r^r$ et $N\omega$ (calcul à partir du couple maximal)** :

Le couple électromagnétique nominal d'un moteur asynchrone est donné par la relation classique suivante, où $\Omega^s$ est la vitesse synchrone et du glissement nominal.

$$\Gamma_{en} = \frac{3V_n^{s\,2}}{g_n\Omega^s} \frac{r^{r\prime}}{\left(\dfrac{r^{r\prime}}{g_n}\right)^2 + (N\omega)^2}$$

Cela nous conduit à l'équation du second degré suivante, où l'inconnue est $r^r$ :

$$r^{r\prime\,2} - \frac{3E^{s\,2}g_n}{\Gamma_{en}\Omega^s}r^{r\prime} + (g_n N\omega)^2 = 0$$

La résolution de cette équation nous conduit à écrire :

$$\boxed{r_{C\max}^{r\prime} = \frac{-b - \sqrt{\Delta}}{2}}$$

Avec :

$$b = -\frac{3E^{s\,2}g_n}{C_n\Omega^s} \quad \text{et} \quad \Delta = \left(\frac{3E^{s\,2}g_n}{C_n\Omega^s}\right)^2 - 4(g_n N\omega)^2$$

De plus, il est établi que le couple maximal qui peut être délivré par un moteur asynchrone est :

$$\Gamma_{max} = \frac{3E^{s^2}}{2\Omega^s}\frac{1}{N\omega}$$

D'où nous tirons :

$$N\omega_{C\,max} = \frac{3E^{s^2}}{2\Omega^s\Gamma_{max}}$$

- **Méthode 2 de calcul de $r^r$ et $N\omega$ (calcul à partir du couple de démarrage)** :
  Cette méthode consiste à s'appuyer sur le couple nominal et le couple de démarrage pour lesquels les valeurs des courants et glissements sont connues.

$$\Gamma_{en} = \frac{3E_n^{s^2}}{g_n\Omega^s}\frac{r^{r\prime}}{\left(\dfrac{r^{r\prime}}{g_n}\right)^2 + (N\omega)^2}$$

Le couple nominal est donné par :

$$\Gamma_d = \frac{3E^{s^2}}{\Omega^s}\frac{r^{r\prime}}{\left(r^{r\prime}\right)^2 + (N\omega)^2}$$

Le couple de démarrage est donné par :
A partir des deux équations précédentes, on obtient :

$$r_{Cd}^{r\prime} = \frac{g_n^2}{1-g_n^2}\frac{3E^{s^2}}{\Omega^s}\left[\frac{1}{g_n\Gamma_{en}} - \frac{1}{\Gamma_d}\right]$$

$$N\omega_{Cd} = \sqrt{\frac{3E^{s^2}}{\Omega^s\Gamma_d}r^{r\prime} - r^{r\prime 2}}$$

- **Valeur moyennée des éléments**

On pourra utiliser la valeur moyenne des valeurs données par ces deux méthodes lorsque ces 2 données, couples de démarrage et maximal, sont disponibles.

$$r^{r\prime} = \frac{1}{2}\left(r_{Cd}^{r\prime} + r_{C\,max}^{r\prime}\right)$$

$$N\omega = \frac{1}{2}\left(N\omega_{Cd} + N\omega_{C\,max}\right)$$

Ces calculs sont utilisés dans une méthode itérative :

Initialisation de $x^s(1)=0$
Tant que la variation de $x^s(i)-x^s(i-1)> 0.001$, refaire les calculs (décrits précédemment)

A partir du Standard IEEE 112, et pour la classe de notre moteur (Classe C), nous avons :

$$x^s(i+1) = 0.5N\omega$$

$$x^{r'}(i+1) = N\omega - x^s$$

$$i = i+1$$

Fin de la boucle.

**Etape 2 de l'utilisation du schéma monophasé équivalent: estimation $R_\mu$ et de $X_\mu$** : Quelle que soit la méthode utilisée pour déterminer $r^r$ et $N\omega = x^s + x^r$, les paramètres $R_\mu$ et $X_\mu$ sont déduits par un bilan de puissance.

Nous avons les puissances au niveau du stator :

$$P_n^s = 1000 \frac{P_u}{\eta/100}$$

avec $P_u$ en kW

$$Q_n^s = \sqrt{\frac{P_n^{s\,2}}{FP_n^{\,2}} - P_n^{s\,2}}$$

Les puissances aux bornes de la branche magnétisante et de la branche rotorique sont :

$$P_n^1 = P_n^1 - 3r^s I_n^{s\,2}$$

$$Q_n^1 = Q_n^s - 3x^s(i)I_n^{s\,2}$$

D'où nous calculons la tension aux bornes de la branche magnétisante :

$$E_n^s = \frac{\sqrt{P_n^{1\,2} + Q_n^{1\,2}}}{3I_n^s}$$

$$Z_n^r = \sqrt{\left(\frac{r^{r'}}{g_n}\right)^2 + \left(x^{r'}\right)^2}$$

Au niveau du rotor, nous avons l'impédance équivalente :

$$I_n^{r'} = \frac{E_n^s}{Z_n^r}$$

D'où nous déduisons le courant rotorique nominal :

$$P_n^{r'} = 3\frac{r^{r'}}{g}I_n^{r'2} \text{ et } Q_n^{r'} = 3x^{r'}I_n^{r'2}$$

Ce qui conduit à écrire que

Nous tirons donc les puissances disponibles au niveau de la branche magnétisante :

$$P_\mu = P_n^s - P_n^{r'} - p_m - p_{SLL}$$

$$Q_\mu = Q_n^s - 3x^s(i)I_n^{s\,2} - Q_n^{r'}$$

$$R_\mu = \frac{3V_n^{s2}}{P_\mu} \qquad X_\mu = \frac{3V_n^{s2}}{Q_\mu}$$

Et finalement, nous déduisons : $\boxed{R_\mu = \frac{3V_n^{s2}}{P_\mu}}$ et $\boxed{X_\mu = \frac{3V_n^{s2}}{Q_\mu}}$

*Application :*

En appliquant la méthode au moteur IIkW mis en évidence dans le tableau, les applications numériques donnent (les calculs sont effectués avec Matlab) :

$r^r$ = 0.387Ω (après 5 itérations de calcul)
$N\omega$ = 1.715Ω (après 5 itérations de calcul)
$x^s = x^r = 0.5N\omega = 0.857Ω$
$R_\mu$ = 191.67Ω
$X_\mu$ = 26.83Ω

Ces valeurs des différentes impédances du schéma monophasé équivalent permettent de déterminer les lois d'évolution des différentes grandeurs de la machine (f.e.m., courants, déphasage, puissance, couple) à partir des équations classiques de la machine asynchrone en faisant varier le glissement g.

**Etape 3 de l'utilisation du schéma monophasé équivalent: calcul du courant à vide $I_0^s$ - Lien avec $E_{Z,(1),0}$**

Lorsque la machine est à vide, g tend vers 0, ce qui permet de ne considérer que la branche magnétisante. On détermine alors l'expression de l'impédance de la machine :

$$Z_0^s = \frac{1}{R^2+X^2}\left[\left(R_\mu X_\mu^2\right) + j\left(x^s R_\mu^2 + x^s X_\mu^2 + R_\mu^2 X_\mu\right)\right] = 1.1281 - j8.3168$$

$$I_{(1),0}^s = \left\|\frac{V_n^s}{Z_0^s}\right\| = 8.3930A$$

Cela conduit au calcul du courant à vide

La marche à vide étant identifié par l'analyse de $E_{TAN}$, on peut alors associer à $E_{Z,(1),0}$ la valeur de $I_{(1),0}^s$.

Nous avons donc à ce stade un premier point $E_{Z,(1),0}$, $I_{(1),0}^s$ de la fonction linéaire qui relie $I_{(1)}^s$ et $E_{Z,(1)}$.

Pour déterminer un deuxième point de $E_{Z,(1)}$, $I_{(1)}^s$ de cette fonction, nous cherchons un point $E_{Z,(1)}$ et $E_{TAN,(1)}$ correspondant à un point de fonctionnement de la machine en charge ; pour cela, on exploite à nouveau le schéma monophasé équivalent à partir des informations du catalogue « constructeur » ou références « constructeur », comme indiqué à l'étape 4 ci-dessous :

- pour calculer le déphasage entre la fem $\underline{E}^s$ et le courant $\underline{I}^s$,

- puis on établi, comme indiqué ci-dessous, la correspondance entre d'une part la courbe de l'évolution du déphasage $\beta_{TAN\_z,(1)}$ entre les valeurs mesurées de la composante tangentielle $E_{TAN,(1)}$ et la composante axiale $E_{Z,(1)}$ du flux de dispersion en fonction du courant, et d'autre part les points de la courbe de l'évolution du déphasage $\beta_{(1)}$ entre $\underline{E}^s$ et le courant $\underline{I}^s$.

**Etape 4 de l'utilisation du schéma monophasé équivalent: détermination de l'angle de couple**

Pour déterminer une autre paire de points notée $(E_{Z,(1)}, E_{TAN,(1)})$ correspondant à un point en charge, on continue à exploiter le schéma monophasé équivalent et les informations de la plaque signalétique.

**• Détermination du déphasage $\beta_{(1)}$ entre la fem $E^s$ et l'intensité absorbée $I^s$**

Le déphasage $\beta_{(1)}$ entre la fem $E^s$ et du courant $I^s$ (schéma monophasé équivalent) peut être déterminé très facilement par exploitation du schéma équivalent. Comme tous les éléments du schéma sont connus, on peut, selon g :

→ déterminer $I^s(g)$ :

$$I^s = V^s \left\{ \frac{\left(R_{\mu s} + \frac{r'^r}{g}\right)^2 + (X_{\mu s} + x'^r)^2}{\left[-x^s(X_{\mu s} + x'^r) + R_{\mu s}\frac{r'^r}{g} - X_{\mu s}x'^r\right]^2 + \left[x^s\left(R_{\mu s} + \frac{r'^r}{g}\right) + X_{\mu s}\frac{r'^r}{g} + R_{\mu s}x'^r\right]^2} \right\}^{\frac{1}{2}}$$

avec

$$R_{\mu s} = R_\mu \frac{X_\mu^2}{R_\mu^2 + X_\mu^2} \text{ et } X_{\mu s} = X_\mu \frac{R_\mu^2}{R_\mu^2 + X_\mu^2} \, .$$

→ déterminer $\beta_{(1)}(g)$

Pour ce faire, on exprime :

$$\underline{I^s} = \underline{I_\mu} + \underline{I'^r} = \frac{E^s}{\frac{jR_\mu X_\mu}{R_\mu + jX_\mu}} + \frac{E^s}{\frac{r'^r}{g} + jx'^r} \, ,$$

expression de laquelle on peut tirer :

$$\beta_{(1)}(g) = Argument\left(\frac{E^s}{\underline{I^s}}\right)$$

Cela conduit, pour chaque valeur de g, à déterminer $\beta_{(1)}(I^s)$, le déphasage entre la tension $E^s$ aux bornes de la branche magnétisante du schéma monophasé équivalent de la machine asynchrone, et $I^s$ l'intensité absorbée par la machine.

La mesure expérimentale du déphasage $\beta_{TAN\_Z,(1)}$ entre la composante tangentielle et la composante axiale présente une évolution similaire à celle du déphasage $\beta_{(1)}(I^s)$.

On peut recaler l'évolution de $\beta_{TAN\_Z,(1)}$ sur celle de $\beta_{(1)}(I^s)$ en ajoutant une constante $C$ à $\beta_{TAN\_Z,(1)}$ de manière à ce que au point de fonctionnement à vide $C + \beta_{TAN\_z,(1)} = 0$. On considère ensuite la valeur absolue de $\beta_{TAN\_Z,(1)}$, le signe dépendant de l'orientation des capteurs. Pour la machine IE2, à titre d'exemple on a ainsi recalé de cette manière les courbes présentées sur la figure 6.

Il est alors possible d'associer, pour chaque valeur de $\beta_{TAN\_z,(1)}$, une valeur du courant d'alimentation et une valeur de $E_{Z,(1)}$ (mesurée en même temps que $\beta_{TAN\_z,(1)}$).

A ce stade, on pourra donc :

- vérifier que $E_{Z,(1)}$ évolue bien linéairement avec le courant d'alimentation déterminé,

- choisir une valeur de $E_{Z,(1)}$ et une valeur de $\beta_{TAN\_z,(1)}$ pour déterminer l'équation du premier degré donnant $I^s(E_{TAN\_z,(1)})$ et ainsi bénéficier d'un protocole très léger en terme de calcul embarqué par la cellule ou d'information à transmettre. On s'assurera que cette mesure de $\beta_{TAN\_z,(1)}$ soit suffisamment éloignée de la marche à vide pour que les 2 points définissant l'équation linéaire ne soient pas trop proches.

Cette méthode ne requiert, pour l'étalonnage, qu'un passage par un point proche de la marche à vide.

On a ainsi un deuxième point $E_{Z,(1)}$, $I^s_{(1)}$ de la fonction linéaire.

Les deux points ($E_{Z,(1),0}$, $I^s_{(1),0}$ ) et ($E_{Z,(1)}$, $I^s_{(1)}$ ) de la fonction linéaire qui relie le courant à la composante axiale du flux de dispersion, on sait calculer les coefficients A et B tels que $I^s_{(1)} = A\,E_{Z,(1)} + B$ .

Cette méthode ne requiert qu'un passage par un point proche de la marche à vide et un autre point de fonctionnement en charge et la connaissance des références « constructeur ».

**Dans le deuxième** cas, i.e. celui où les références « constructeur » ne sont pas connues, à la valeur $E_{Z,(1),0}$

de l'amplitude de la composante axiale correspondant à un point de fonctionnement à vide, on associe une valeur de l'amplitude de l'intensité du courant absorbée par la machine à vide, estimée de manière simplifiée à une valeur comprise entre 40 % à 50 % de l'intensité absorbée par la machine en fonctionnement nominal, cette dernière valeur étant une caractéristique connue indiquée sur la plaque signalétique de la machine.

Il est possible de calculer, par une exploitation préalable du schéma monophasé équivalent et des caractéristiques constructeurs de machines de catégorie voisine et du schéma monophasé équivalent des abaques des pourcentages à appliquer pour ces différentes machines; en fonction de la puissance de la machine considérée pour la mesure de l'intensité absorbée, on procède alors par extrapolation à partir des abaques calculées, pour obtenir une estimation plus précise du pourcentage à appliquer à l'intensité nominale absorbée, pour estimer l'intensité du courant absorbée par la machine à vide.

On obtient ainsi un premier point de la droite représentative de la relation linéaire du type $I^s_{(1)} = A\,E_{Z,(1)} + B$.

Sans autres informations on choisira $I^s_{(1),0} = 45\%$ de l'intensité nominale indiquée sur la plaque signalétique.

On peut aussi extrapoler une meilleure approximation du pourcentage à prendre en compte, en estimant ce pourcentage, pour des machines de catégorie, notamment en puissance, voisines de la machine considérée, et à partir des références « constructeur » connues pour ces machines.

Un deuxième point de la droite d'équation $I^s_{(1)} = A\,E_{Z,(1)} + B$ sera ensuite déterminé en considérant la courbe de l'évolution, en fonction de l'intensité, du déphasage entre la composante tangentielle et la composante axiale, et en retenant sur cette courbe, un point pour lequel le déphasage mesuré est proche du maximum, estimé généralement à 60°. La valeur de la composante axiale $E_{Z,(1)}$ pour ce point sera choisie et sera associée à l'intensité nominale telle qu'elle figure sur la plaque signalétique, pour constituer le deuxième point de la droite d'équation $I^s_{(1)} = A\,E_{Z,(1)} + B$.

Ces deux points de fonctionnement permettent alors de calculer A et B.

L'étape de calibration est ainsi terminée.

Il est alors possible de déterminer le courant absorbé pour n'importe quel point de fonctionnement de la machine à partir de la seule mesure de l'amplitude $E_{Z,(1)}$ de la composante axiale.

Une fois l'amplitude du courant déterminée, le couple électromagnétique peut être calculé de deux manières différentes selon que les informations « constructeurs », i.e. le couple de démarrage et/ou le couple maximal sont connus.

**Dans le premier cas,** lorsque l'on dispose des références « constructeurs » de la machine, il a précédemment été montré que les éléments du schéma monophasé équivalent pouvaient être estimés. Il est donc possible de déterminer la loi d'évolution théorique du couple selon le courant. La méthode précédemment décrite permettant d'estimer le courant, il est alors aisé de déterminer le couple électromagnétique.

**Dans le second cas**, on ne connaît pas le couple de démarrage et/ou le couple maximal. En ayant recours à la f.e.m. $E_{TAN,(1)}$ de la composante tangentielle du champ de dispersion, il est possible de déterminer le couple électromagnétique. En effet, des travaux antérieurs ont permis de développer une technique qui permet d'estimer le couple électromagnétique développé par un moteur asynchrone à partir de la mesure du courant, de la composante tangentielle $E_{TAN,(1)}$ du flux de dispersion et de l'angle $\beta_{TAN,(1)}$ que forment ces deux grandeurs, par l'équation suivante :

$$\Gamma_e = \Gamma_{e,n}\frac{I^s_{(1)}\,E_{TAN,(1)}\,\sin\!\left(\beta_{TAN,(1)} - \beta_{TAN,(1),0}\right)}{I^s_{(1),n}\,E_{TAN,(1),n}\,\sin\!\left(\beta_{TAN,(1),n} - \beta_{TAN,(1),0}\right)}$$

L'idée est d'utiliser le même principe, en utilisant l'estimation du courant précédemment décrite, afin d'avoir une image du courant à partir de la mesure de la composante axiale du flux de dispersion $E_{Z,(1)}$. Ainsi, la valeur du courant $I^s_{(1)}$ est estimée à partir de la f.e.m. $E_{Z,(1)}$ mesurée en position axiale sur le flasque de la machine. La variation $(\beta_{TAN,(1)} - \beta_{TAN,(1),0})$ du déphasage entre $E_{TAN,(1)}$ et $I^s_{(1)}$ peut être remplacée par la variation $(\beta_{TAN\_Z,(1)} - \beta_{TAN\_Z,(1),0})$ du déphasage entre $E_{TAN,(1)}$ et $E_{Z,(1)}$. En effet, il a été démontré que les variations des deux déphasages $\beta_{TAN,(1)}$ et $\beta_{TAN\_Z,(1)}$ évolue de manière similaire avec le courant $I^s_{(1)}$ et donc avec le niveau de charge de la machine. Par conséquent, l'équation précédente peut se réécrire de la manière suivante, avec $I^s_{(1)} = f\!\left(E_{Z,(1)}\right) = A.E_{Z,(1)} + B$ :

$$\Gamma_e = \Gamma_{e,n} \frac{\left[I^s_{(1)} = f\left(E_{Z,(1)}\right)\right] E_{TAN,(1)} \sin\left(\beta_{TAN\_Z,(1)} - \beta_{TAN\_Z,(1),0}\right)}{I^s_{(1),n} E_{TAN,(1),n} \sin\left(\beta_{TAN\_Z,(1),n} - \beta_{TAN\_Z,(1),0}\right)}$$

La calibration de ce protocole d'estimation du couple nécessite la connaissance des valeurs :

- du couple électromagnétique nominal $\Gamma_{e,n}$ et du courant nominal $I^s_{(1),n}$ tirés à partir de la plaque signalétique de la machine,
- des f.e.m. $E_{TAN,(1),0}$ et $E_{Z,(1),0}$ et du déphasage $\beta_{TAN\_Z,(1),0}$ au fonctionnement à vide ; ces valeurs sont mesurées lors de la procédure de calibration de l'estimation du courant,

de la f.e.m. $E_{TAN,(1),0}$ et du déphasage $\beta_{TAN\_Z,(1),n}$ mesurés au fonctionnement nominal de la machine ; ces valeurs mesurées lors de la procédure de calibration de l'estimation du courant ou bien mesurée lorsque la machine passe par son point de fonctionnement nominal et que la procédure de calibration a été réalisée au régime de fonctionnement à vide.

## Revendications

1. Procédé de détermination d'au moins une grandeur caractéristique d'une machine électrique asynchrone (10) en fonctionnement, la machine comprenant au moins un stator (7) et un rotor tournant (8) par rapport au stator (7) autour d'un axe (9) confondu avec l'axe longitudinal de la machine, le stator comprenant au moins deux pôles, et rayonnant, en fonctionnement, en au moins un premier ensemble de points (1) localisés autour de la surface externe de la machine, un champ magnétique ayant une composante axiale (3) orientée parallèlement audit axe (9), et en au moins un deuxième ensemble de points (2) localisés autour de la surface externe de la machine, un champ magnétique ayant une composante tangentielle définie le long d'une direction contenue dans un plan transversal audit axe et orientée perpendiculairement à la droite passant, dans ce plan, par un des points dudit deuxième ensemble de points et ledit axe, le procédé comprenant une phase d'étalonnage puis une phase d'évaluation de l'au moins une grandeur caractéristique :

   - la phase d'étalonnage comprenant :

     ◦ une première étape de mesure, au niveau dudit premier ensemble de points, de la composante axiale et simultanément, au niveau dudit deuxième ensemble de points, de la composante tangentielle, ainsi que du déphasage entre la composante axiale et la composante tangentielle, pour une pluralité de valeurs d'intensité absorbée par la machine,
     ◦ à partir des résultats de la première étape de mesure, une étape de construction d'une courbe d'étalonnage sous la forme d'une droite liant l'intensité absorbée et la composante axiale, ladite étape de construction comprenant une étape de détermination d'un binôme de fonctionnement à vide **caractérisé par** une amplitude de composante axiale à vide et une intensité absorbée à vide, et une étape de détermination d'un deuxième binôme de fonctionnement **caractérisé par** une deuxième amplitude de composante axiale et une deuxième intensité absorbée,
     ◦ ladite étape de détermination d'un binôme de fonctionnement à vide comprenant en outre une étape de détermination d'un domaine de fonctionnement à vide (4) et d'un point de ce domaine (6) **caractérisé par** une amplitude de composante tangentielle à vide et une amplitude de composante axiale à vide mesurées simultanément à la première étape de mesure,

   - la phase d'évaluation comprenant :

     ◦ une deuxième étape de mesure, en un point de fonctionnement, de la composante axiale, de la composante tangentielle, et du déphasage entre la composante tangentielle et la composante axiale,
     ◦ une étape de détermination, au point de fonctionnement mesuré, d'au moins une grandeur caractéristique de la machine à partir des valeurs mesurées à la deuxième étape de mesure, en utilisant la courbe d'étalonnage.

2. Procédé de détermination, selon la revendication précédente, dans lequel la au moins une grandeur caractéristique est l'intensité absorbée par la machine, et dans lequel l'étape de détermination du binôme de fonctionnement à vide comprend les étapes suivantes :

◦ Estimer une intensité absorbée à vide par la machine à partir :

■ d'un schéma monophasé équivalent (14) de la machine et de caractéristiques constructeur de la machine,
■ ou
■ d'un modèle simplifié selon lequel l'intensité absorbée à vide est égale à une valeur comprise entre 40 et 50 % de l'intensité absorbée nominale indiquée sur une plaque signalétique de la machine,

◦ Déterminer un binôme de fonctionnement à vide **caractérisé par** l'amplitude de composante axiale à vide et l'intensité absorbée à vide.

3. Procédé de détermination selon la revendication 2 dans lequel l'étape de détermination du domaine de fonctionnement à vide consiste à identifier, sur une courbe formée par les points de coordonnées égales aux amplitudes de composantes axiales et aux amplitudes de composantes tangentielles mesurées simultanément au cours de la première étape de mesure, une première portion de la courbe plus pentue qu'une deuxième portion de cette courbe.

4. Procédé de détermination selon l'une des revendications 2 ou 3, dans lequel la au moins une grandeur caractéristique est l'intensité absorbée par la machine, et dans lequel le schéma monophasé équivalent comprend une branche magnétisante avec une tension aux bornes de cette branche magnétisante, et dans lequel l'étape de détermination du deuxième binôme de fonctionnement comprend les étapes suivantes :

◦ Déterminer un déphasage à vide égal au déphasage mesuré entre la composante axiale à vide et la composante tangentielle à vide,
◦ Calculer à partir du schéma monophasé équivalent (14) de la machine et des caractéristiques constructeur de la machine, les valeurs du déphasage entre la tension aux bornes de la branche magnétisante et l'intensité absorbée par la machine, et construire une courbe de l'évolution de ces valeurs en fonction de l'intensité absorbée par la machine ;
◦ Recaler la courbe de l'évolution du déphasage entre la tension aux bornes de la branche magnétisante et l'intensité absorbée par la machine, en fonction de l'intensité absorbée par la machine, par rapport à une courbe de l'évolution du déphasage mesuré entre la composante axiale et la composante tangentielle, de sorte qu'à chaque point de la courbe de l'évolution du déphasage mesuré entre la composante axiale et la composante tangentielle correspond un point correspondant de la courbe de l'évolution du déphasage entre la tension aux bornes de la branche magnétisante et l'intensité absorbée par la machine ;
◦ Déterminer un deuxième point sur la courbe de l'évolution du déphasage mesuré entre la composante axiale et la composante tangentielle, tel que le déphasage en ce deuxième point est un deuxième déphasage supérieur au déphasage à vide;
◦ Déterminer sur la courbe de l'évolution du déphasage entre la tension aux bornes de la branche magnétisante et l'intensité absorbée par la machine, en fonction de l'intensité absorbée par la machine, le point correspondant au deuxième point;
◦ Déterminer la deuxième amplitude de composante axiale égale à l'amplitude de la composante axiale mesurée simultanément au deuxième déphasage;
◦ Déterminer la deuxième intensité absorbée égale à l'abscisse du point correspondant au deuxième point, sur la courbe de l'évolution, en fonction de l'intensité absorbée par la machine, du déphasage entre la tension aux bornes de la branche magnétisante et l'intensité absorbée par la machine;
◦ Déterminer le deuxième binôme de fonctionnement **caractérisé par** la deuxième amplitude de composante axiale et la deuxième intensité absorbée.

5. Procédé de détermination selon l'une des revendications 2 à 4, dans lequel l'au moins une grandeur caractéristique comprend le couple électromagnétique généré au niveau du rotor de la machine électrique asynchrone en fonctionnement, le procédé comprenant une première phase consistant à mettre en œuvre le procédé de détermination de l'intensité absorbée selon l'une des revendications 2 à 4, et une deuxième phase consistant à déterminer une valeur estimée du couple électromagnétique à partir :

a. de l'intensité absorbée déterminée au cours de la première phase, ou
b. du couple électromagnétique nominal et du courant nominal tels qu'indiqués sur une plaque signalétique de la machine, et des valeurs suivantes mesurées ou déterminées au cours de la première phase :

*i.* l'amplitude de la composante tangentielle, et le déphasage entre la composante tangentielle et la composante axiale, et l'intensité absorbée au point de fonctionnement mesuré,

*ii.* le déphasage à vide entre la composante tangentielle à vide et la composante axiale à vide,

*iii.* une deuxième amplitude de composante tangentielle mesurée simultanément à la deuxième amplitude de composante axiale, et le déphasage entre la deuxième amplitude de composante tangentielle et la deuxième amplitude de composante axiale.

6. Dispositif de détermination d'au moins une grandeur caractéristique d'une machine électrique asynchrone en fonctionnement, comprenant :

   a. au moins un capteur de mesure de la composante axiale du champ rayonné par la machine autour de sa surface externe,

   b. au moins un capteur de mesure de la composante tangentielle,

   c. un programme d'ordinateur comprenant les instructions nécessaires à la mise en œuvre des étapes du procédé selon les revendications 1 à 5 lorsque ce programme est implémenté sur un ordinateur et/ou un support d'enregistrement comprenant un programme d'ordinateur comprenant les instructions nécessaires à la mise en œuvre des étapes du procédé selon les revendications 1 à 5 lorsque ce programme est implémenté sur un ordinateur.

7. Dispositif de détermination selon la revendication précédente, dans lequel l'au moins un capteur de mesure de la composante axiale et l'au moins un capteur de mesure de la composante tangentielle forme un unique capteur.

8. Dispositif de détermination selon l'une des revendications 6 ou 7 la machine comprenant au moins un stator et un rotor tournant par rapport au stator autour d'un axe confondu avec l'axe longitudinal de la machine, le stator comprenant au moins deux pôles, le capteur de mesure de la composante axiale du champ magnétique rayonné par la machine autour de sa surface externe comprenant au moins une spire d'un fil électriquement conducteur enroulé autour d'une portion de surface plane délimitée par un dièdre et deux arcs de cercle centrés au sommet du dièdre, l'ouverture angulaire du dièdre étant déterminée pour couvrir au moins une partie d'un pôle ou une phase de la machine asynchrone, le capteur étant disposé dans un même plan transversal à et autour de l'axe de la machine.

**Patentansprüche**

1. Verfahren zur Bestimmung von mindestens einer charakteristischen Größe einer asynchronen elektrischen Maschine (10) im Betrieb, wobei die Maschine mindestens einen Stator (7) und einen in Bezug auf den Stator (7) drehenden Rotor (8) um eine Achse (9) umfasst, die mit der Längsachse der Maschine zusammenfällt, wobei der Stator mindestens zwei Pole umfasst und im Betrieb in mindestens einer erstes Anordnung von Punkten (1) abstrahlt, die um die Außenfläche der Maschine lokalisiert sind, wobei ein Magnetfeld eine axiale Komponente (3) hat, die parallel zu der Achse (9) ausgerichtet ist, und in mindestens einer zweiten Anordnung von Punkten (2) abstrahlt, die um die Außenfläche der Maschine lokalisiert sind, wobei ein Magnetfeld eine tangentiale Komponente hat, die entlang einer Richtung definiert ist, die in einer zu der Achse transversalen Ebene definiert und senkrecht zu der Geraden ausgerichtet ist, die in dieser Ebene durch einen der Punkte der zweiten Anordnung von Punkten und die Achse verläuft, wobei das Verfahren eine Eichphase, dann eine Bewertungsphase der mindestens einen charakteristischen Größe umfasst:

   - wobei die Eichphase umfasst:

     o einen ersten Messschritt, im Bereich der ersten Anordnung von Punkten, der axialen Komponente und gleichzeitig, im Bereich der zweiten Anordnung von Punkten, der tangentialen Komponente, sowie der Phasenverschiebung zwischen der axialen Komponente und der tangentialen Komponente, für eine Vielzahl von Werten einer von der Maschine absorbierten Intensität,

     o auf der Basis der Ergebnisse des ersten Messschritts, einen Konstruktionsschritt einer Eichkurve in Form einer Geraden, die die absorbierte Intensität und die axiale Komponente verbindet, wobei der Konstruktionsschritt einen Bestimmungsschritt eines Leerlaufbetriebsbinoms umfasst, **gekennzeichnet durch** eine Amplitude einer axialen Leerlaufkomponente und einer absorbierten Leerlaufintensität, und einen Bestimmungsschritt eines zweiten Betriebsbinoms, **gekennzeichnet durch** eine zweite Amplitude einer axialen Komponente und eine zweite absorbierte Intensität,

     o wobei der Bestimmungsschritt eines Leerlaufbetriebsbinoms ferner einen Bestimmungsschritt eines Leerlaufbetriebsbereichs (4) und eines Punkts dieses Bereichs (6) umfasst, **gekennzeichnet durch** eine Amplitude einer tangentialen Leerlaufkomponente und eine Amplitude einer axialen Leerlaufkomponente, die beim ersten Messschritt gleichzeitig gemessen werden,

wobei die Bewertungsphase umfasst:

 o einen zweiten Messschritt, an einem Betriebspunkt, der axialen Komponente, der tangentialen Komponente und der Phasenverschiebung zwischen der tangentialen Komponente und der axialen Komponente,
 o einen Bestimmungsschritt, am gemessenen Betriebspunkt, von mindestens einer charakteristischen Größe der Maschine auf der Basis der im zweiten Messschritt gemessenen Werte bei Verwendung der Eichkurve.

2.  Bestimmungsverfahren nach vorangehendem Anspruch, wobei die mindestens eine charakteristische Größe die von der Maschine absorbierte Intensität ist und wobei der Bestimmungsschritt des Leerlaufbetriebsbinoms die folgenden Schritte umfasst:

 o Kalkulieren einer von der Maschine absorbierten Leerlaufintensität auf der Basis:

  ▪ eines äquivalenten Einphasenschemas (14) der Maschine und von Konstruktionsmerkmalen der Maschine,
  ▪ oder
  ▪ eines vereinfachten Modells, dem zufolge die absorbierte Leerlaufintensität gleich einem Wert ist, der zwischen 40 und 50 % der nominalen absorbierten Intensität liegt, die auf einem Maschinenschild der Maschine angegeben ist,

 o Bestimmen eines Leerlaufbetriebsbinoms, das durch die Amplitude einer axialen Leerlaufkomponente und die absorbierte Leerlaufintensität gekennzeichnet ist.

3.  Bestimmungsverfahren nach Anspruch 2, wobei der Bestimmungsschritt des Leerlaufbetriebsbereichs darin besteht, auf einer Kurve, die von Punkten von Koordinaten gebildet ist, die gleich den Amplituden axialer Komponenten und Amplituden tangentialer Komponenten sind, gemessen gleichzeitig während des ersten Messschritts, einen ersten Abschnitt der Kurve zu identifizieren, der schräger als ein zweiter Abschnitt dieser Kurve ist.

4.  Bestimmungsverfahren nach einem der Ansprüche 2 oder 3, wobei die mindestens eine charakteristische Größe die von der Maschine absorbierte Intensität ist und wobei das äquivalente einphasige Schema eine magnetisierende Abzweigung mit einer Spannung an den Klemmen dieser magnetisierenden Abzweigung umfasst und wobei der Bestimmungsschritt des zweiten Betriebsbinoms die folgenden Schritte umfasst:

 o Bestimmen einer Leerlauf-Phasenverschiebung gleich der zwischen der axialen Leerlaufkomponente und der tangentialen Leerlaufkomponente gemessenen Phasenverschiebung,
 o Berechnen, auf der Basis des äquivalenten einphasigen Schemas (14) der Maschine und der Konstruktionsmerkmale der Maschine, der Werte der Phasenverschiebung zwischen der Spannung an den Klemmen der magnetisierenden Abzweigung und der von der Maschine absorbierten Intensität und Zeichnen einer Kurve der Entwicklung dieser Werte in Abhängigkeit von der von der Maschine absorbierten Intensität;
 o Neuausrichtung der Kurve der Entwicklung der Phasenverschiebung zwischen der Spannung an den Klemmen der magnetisierenden Abzweigung und der von der Maschine absorbierten Intensität in Abhängigkeit von der von der Maschine absorbierten Intensität in Bezug auf eine Kurve der Entwicklung der zwischen der axialen Komponente und der tangentialen Komponente gemessenen Phasenverschiebung, so dass jedem Punkt der Kurve der Entwicklung der Phasenverschiebung, gemessen zwischen der axialen Komponente und der tangentialen Komponente, ein Punkt entspricht, der der Kurve der Entwicklung der Phasenverschiebung zwischen der Spannung an den Klemmen der magnetisierenden Abzweigung und der von der Maschine absorbierten Intensität entspricht;
 o Bestimmen eines zweiten Punkts auf der Kurve der Entwicklung der Phasenverschiebung, gemessen zwischen der axialen Komponente und der tangentialen Komponente, derart, dass die Phasenverschiebung an diesem zweiten Punkt eine zweite Phasenverschiebung ist, die größer als die Leerlauf-Phasenverschiebung ist;
 o Bestimmen, auf der Kurve der Entwicklung der Phasenverschiebung zwischen der Spannung an den Klemmen der magnetisierenden Abzweigung und der von der Maschine absorbierten Intensität in Abhängigkeit von der von der Maschine absorbierten Intensität, des Punkts, der dem zweiten Punkt entspricht;

o Bestimmen der zweiten Amplitude einer axialen Komponente gleich der Amplitude der axialen Komponente, gemessen gleichzeitig bei der zweiten Phasenverschiebung;

o Bestimmen der zweiten absorbierten Intensität gleich der Abszisse des Punkts, der dem zweiten Punkt entspricht, auf der Kurve der Entwicklung in Abhängigkeit von der von der Maschine absorbierten Intensität, der Phasenverschiebung zwischen der Spannung an den Klemmen der magnetisierenden Abzweigung und der von der Maschine absorbierten Intensität;

o Bestimmen des zweiten Betriebsbinoms, das durch die zweite Amplitude der axialen Komponente und die zweite absorbierte Intensität gekennzeichnet ist.

5. Bestimmungsverfahren nach einem der Ansprüche 2 bis 4, wobei die mindestens eine charakteristische Größe das elektromagnetische Kraftmoment umfasst, das im Bereich des Rotors der asynchronen elektrischen Maschine im Betrieb erzeugt wird, wobei das Verfahren eine ersten Phase umfasst, die darin besteht, das Verfahren zur Bestimmung der absorbierte Intensität nach einem der Ansprüche 2 bis 4 durchzuführen, und eine zweite Phase, die darin besteht, einen kalkulierten Wert des elektromagnetischen Kraftmoments zu bestimmen auf der Basis:

a. der absorbierten Intensität, bestimmt während der ersten Phase, oder

b. des nominalen elektromagnetischen Kraftmoments und des nominalen Stroms, so wie auf einem Maschinenschild der Maschine angegeben, und der folgenden Werte, die während der ersten Phase gemessen oder bestimmt werden:

i. die Amplitude der tangentialen Komponente und die Phasenverschiebung zwischen der tangentialen Komponente und der axialen Komponente und die absorbierte Intensität am gemessenen Betriebspunkt,

ii. die Leerlauf-Phasenverschiebung zwischen der tangentialen Leerlaufkomponente und der axialen Leerlaufkomponente,

iii. eine zweite Amplitude einer tangentialen Komponente, gemessen gleichzeitig mit der zweiten Amplitude einer axialen Komponente, und die Phasenverschiebung zwischen der zweiten Amplitude einer tangentialen Komponente und der zweiten Amplitude einer axialen Komponente.

6. Vorrichtung zur Bestimmung von mindestens einer charakteristischen Größe einer asynchronen elektrischen Maschine im Betrieb, umfassend:

a. mindestens einen Messsensor der axialen Komponente des Strahlungsfelds der Maschine um ihre Außenfläche,

b. mindestens einen Messsensor der tangentialen Komponente,

c. ein Rechnerprogramm, das die notwendigen Befehle für die Durchführung der Schritte des Verfahrens nach den Ansprüchen 1 bis 5 umfasst, wenn dieses Programm auf einem Rechner implementiert ist, und/oder ein Speichermedium, das ein Rechnerprogramm umfasst, das die notwendigen Befehle für die Durchführung des Verfahrens nach den Ansprüchen 1 bis 5 umfasst, wenn dieses Programm auf einem Rechner implementiert ist.

7. Bestimmungsvorrichtung nach vorangehendem Anspruch, wobei der mindestens eine Messsensor der axialen Komponente und der mindestens eine Messsensor der tangentialen Komponente einen einzigen Sensor bilden.

8. Bestimmungsvorrichtung nach einem der Ansprüche 6 oder 7, wobei die Maschine mindestens einen Stator und einen Rotor umfasst, der in Bezug auf den Stator um eine Achse dreht, die mit der Längsachse der Maschine zusammenfällt, wobei der Stator mindestens zwei Pole umfasst, wobei der Messsensor der axialen Komponente des Magnetfelds, das von der Maschine um ihre Außenfläche abgestrahlt wird, mindestens eine Windung eines elektrisch leitenden Drahts umfasst, der um einen ebenen Oberflächenabschnitt gewickelt ist, der von einem Dieder und zwei Kreisbögen begrenzt ist, die an der Spitze des Dieders zentriert sind, wobei die Winkelöffnung des Dieders vorgesehen ist, mindestens einen Teil eines Pols oder einer Phase der Asynchronmaschine abzudecken, wobei der Sensor in derselben transversalen Ebene in der und um die Achse der Maschine angeordnet ist.

## Claims

1. A method for determining at least one characteristic quantity of an asynchronous electric machine (10) in operation, the machine comprising at least one stator (7) and a rotating rotor (8) relative to the stator (7) about an axis (9) coincident with the longitudinal axis of the machine, the stator comprising at least two poles, and radiating, in operation, in at least one first set of points (1) located around the outer surface of the machine, a magnetic field having an axial component (3) oriented parallel to said axis (9), and in at least a second set of points (2) located around the outer surface of the machine, a magnetic field having a tangential component defined along a direction contained in a plane transverse to said axis and oriented perpendicular to the line passing, in this plane, through one of the points of said second set of points and said axis, the method comprising a calibration phase then an evaluation phase of at least one characteristic quantity:

- the calibration phase comprising:

o a first step of measuring, at said first set of points, the axial component and simultaneously, at said second set of points, the tangential component, as well as the phase shift between the axial component and the tangential component, for a plurality of intensity values absorbed by the machine,

o from the results of the first measuring step, a step of constructing a calibration curve under the form of a straight line linking the absorbed intensity and the axial component, said construction step comprising a step of determining a no-load operation binomial **characterized by** an amplitude of the no-load axial component and an absorbed no-load intensity, and a step of determining a second operation binomial **characterized by** a second amplitude of axial component and a second absorbed intensity,

o said step of determining a no-load operation binomial further comprising a step of determining of a no-load operation field (4) and of a point of this field (6) **characterized by** an amplitude of no-load tangential component and an amplitude of no-load axial component measured simultaneously at the first measuring step,

- the evaluation phase comprising:

o a second step of measuring, at an operation point, the axial component, the tangential component, and the phase shift between the tangential component and the axial component,

o a step of determining, at the measured operation point, at least one characteristic quantity of the machine from the values measured in the second measuring step, using the calibration curve.

2. The determination method, according to the preceding claim, wherein the at least one characteristic quantity is the intensity absorbed by the machine, and wherein the step of determining the no-load operation binomial consists of the following steps of:

o Estimating a no-load intensity absorbed by the machine from:

- an equivalent single-phase diagram (14) of the machine and machine manufacturer characteristics,
- or
- a simplified model according to which the no-load absorbed intensity is equal to a value comprised between 40 and 50% of the nominal absorbed current indicated on a machine nameplate,

o Determining a no-load operation binomial **characterized by** the amplitude of the no-load axial component and the no-load absorbed intensity.

3. The determination method according to claim 2 wherein the step of determining the no-load operation field consists in identifying, on a curve formed by the points of coordinates equal to the amplitudes of axial components and to the amplitudes of tangential components measured simultaneously during the first measuring step, a first portion of the curve is steeper than a second portion of this curve.

4. The determination method according to any of claims 2 or 3, wherein the at least one characteristic quantity is the intensity absorbed by the machine, and wherein the equivalent single-phase diagram comprises a branch magnetizing with a voltage across this magnetizing branch, and wherein the step of determining the second operation binomial comprises the following steps of:

o Determining a no-load phase shift equal to the measured phase shift between the no-load axial component and the no-load tangential component,

o Calculating from the equivalent single-phase diagram (14) of the machine and machine manufacturer characteristics, the values of the phase shift between the voltage across the magnetizing branch and the intensity absorbed by the machine, and constructing a curve of the evolution of these values according to the intensity absorbed by the machine;

o Readjusting the curve of the evolution of the phase shift between the voltage across the magnetizing branch and the absorbed intensity by the machine, depending on the intensity absorbed by the machine, relative to a curve of the evolution of the phase shift measured between the axial component and the tangential component, so that at each point of the curve of the evolution of the phase shift measured between the axial component and the tangential component corresponds a corresponding point on the evolution curve of the phase shift between the voltage across the magnetizing branch and the intensity absorbed by the machine;

o Determining a second point on the curve of the evolution of the phase shift measured between the axial component and the tangential component, such as the phase shift in this second point is a second phase shift greater than the no-load phase shift;

o Determining on the curve of evolution of the phase shift between the voltage across the magnetizing branch and the intensity absorbed by the machine, depending on the intensity absorbed by the machine, the point corresponding to the second point;

o Determining the second amplitude of the axial component equal to the amplitude of the axial component measured simultaneously with the second phase shift;

o Determining the second absorbed intensity equal to the abscissa of the point corresponding to the second point, on the curve of evolution, depending on the intensity absorbed by the machine, of the phase shift between the voltage across the magnetizing branch and the intensity absorbed by the machine;

o Determining the second operation binomial **characterized by** the second amplitude of the axial component and the second absorbed intensity.

5. The determination method according to any of claims 2 to 4, wherein the at least one characteristic quantity comprises the electromagnetic torque generated at the rotor of the asynchronous electric machine in operation, the method comprising a first phase consisting in implementing the method for determining the intensity absorbed according to any of claims 2 to 4, and a second phase consisting in determining an estimated value of the electromagnetic torque from:

   a. the absorbed intensity determined during the first phase, or
   b. nominal electromagnetic torque and nominal current such indicated on a machine nameplate, and following values measured or determined during the first phase:

      i. the amplitude of the tangential component, and the phase shift between the tangential component and the axial component, and the intensity absorbed at the measured operation point,
      ii. the no-load phase shift between the no-load tangential component and the no-load axial component,
      iii. a second amplitude of a tangential component measured simultaneously with the second amplitude of axial component, and the phase shift between the second amplitude of the tangential component and the second amplitude of the axial component.

6. A device for determining at least one characteristic quantity of an asynchronous electric machine in operation, comprising:

   a. at least one sensor for measuring the axial component of the field radiated by the machine around its outer surface,
   b. at least one sensor for measuring the tangential component,
   c. a computer program comprising the instructions necessary for the implementation of the steps of the method according to claims 1 to 5 when this program is implemented on a computer and/or a recording medium comprising a computer program comprising the instructions necessary for the implementation of the steps of the method according to claims 1 to 5 when this program is implemented on a computer.

7. The determination device according to the preceding claim, wherein the at least one axial component measurement sensor and at least one tangential component measurement sensor forms a single sensor.

8. The determination device according to any of claims 6 or 7, the machine comprising at least one stator and one rotor rotating relative to the stator about an axis coincident with the longitudinal axis of the machine, the stator comprising at least two poles, the sensor for measuring the axial component of the magnetic field radiated by the machine about its outer surface comprising at least one turn of an electrically conductive wire wrapped around a portion of a flat surface delimited by a dihedron and two arcs of a circle centered at the top of the dihedron, the angular opening of the dihedron being determined to cover at least one portion of a pole or a phase of the asynchronous machine, the sensor being disposed in the same plane transverse to and about the axis of the machine.

**Fig. 1**

**Fig. 2**

**Fig. 3**

Fig. 4

Fig. 5

**Fig. 6**

**Fig. 7**

**Fig. 8**

**Fig. 9**

## RÉFÉRENCES CITÉES DANS LA DESCRIPTION

**Documents brevets cités dans la description**

- WO 2011085805 A